# EUROPÄISCHE PATENTSCHRIFT

(11) **EP 3 818 475 B1**
(45) Veröffentlichungstag und Bekanntmachung des Hinweises auf die Patenterteilung: **18.02.2026**
(21) Anmeldenummer: 19730337.3
(22) Anmeldetag: 12.06.2019
(51) Int. Cl.: G06K 19/02, G06K 19/07, H01Q 1/00, H04B 5/00

(54) **DUALBANDTRANSPONDER UND TEXTILES ETIKETT MIT DUALBANDTRANSPONDER**
DUAL BAND TRANSPONDER AND TEXTILE LABEL WITH DUAL BAND TRANSPONDER
TRANSPONDEUR À DOUBLE BANDE ET ETIQUETTE AVEC TRANSPONDEUR À DOUBLE BANDE

(30) Priorität: 27.07.2018 DE 102018212594
(43) Veröffentlichungstag der Anmeldung: 12.05.2021
(73) Patentinhaber: TexTrace AG, 5070 Frick (CH)
(72) Erfinder: BÜHLER, Stephan, 8107 Buchs ZH (CH); MÜLLER, Jörg, 5062 Oberhof/AG (CH)
(74) Vertreter: HGF
(86) Internationale Anmeldenummer: PCT/EP2019/065343
(87) Internationale Veröffentlichungsnummer: WO 2020/020530

(56) Entgegenhaltungen:
- DE-A1- 102007 017 864
- DE-A1- 102013 111 027
- US-A- 6 049 461
- US-A1- 2010 001 079
- US-A1- 2010 321 161
- US-A1- 2011 084 888
- US-A1- 2013 050 047
- US-A1- 2014 246 503
- US-A1- 2016 342 883
- US-A1- 2017 195 009

## Beschreibung

### TECHNISCHES GEBIET DER ERFINDUNG

Die Erfindung betrifft einen Dualbandtransponder, insbesondere einen Transponder mit kombinierter Datenübertragungsfunktionalität im Ultrahochfrequenzbereich (UHF) und Nahfeldkommunikationsbereich (NFC). Die Erfindung betrifft weiterhin ein textiles Etikett mit einem derartigen Dualbandtransponder. Ferner betrifft die Erfindung Herstellungsverfahren für solche Dualbandtransponder und textile Etiketten mit Dualbandtranspondern.

### TECHNISCHER HINTERGRUND

In der textilen Wertschöpfungskette ist es Usus, Etiketten mit Hochfrequenz- und/oder Ultrahochfrequenztranspondern zu verwenden, sogenannte "radio frequency identification tags" (RFID-Tags). Auf derartigen Transpondern können Daten im Zusammenhang mit Herstellung, Identifikation, Verteilung, Verkauf und Marketing des etikettierten Produktes auslesbar gespeichert werden.

Nahfeldkommunikationstechnologie ("Near Field Communication", NFC) baut auf der RFID-Technologie im Generellen auf und hat sich als internationaler Übertragungsstandard zum kontaktlosen Austausch von Daten etabliert. Dazu werden über eine Luftstrecke von wenigen Zentimetern getrennte Spulen mittels des Wirkprinzips der elektromagnetischen Induktion temporär gekoppelt, um Daten durch Messung der Rückkopplungseffekt von einem NFC-Transponder an ein NFC-fähiges Lesegerät übertragen zu können. In der Textilbranche können derartige NFC-Tags für eine Kommunikation mit dem Endkunden, beispielsweise für Marketingmaßnahmen, genutzt werden.

Die Verwendung verschiedener drahtloser Datenübertragungstechnologien für dasselbe Produkt kann Vorteile in verschiedenen Stadien der Wertschöpfungskette mit sich bringen. Eine Möglichkeit hierzu besteht darin, zwei verschiedene RFID-Etiketten zu verwenden, was die Programmierung und Pflege der vorgehaltenen Daten verkompliziert. Eine andere Möglichkeit besteht darin, Etiketten mit Transpondern zu verwenden, die in mehreren Frequenzbändern und unter Nutzung verschiedener Hochfrequenzdatenübertragungsstandards arbeiten können. Durch Einbettung verschiedener Transponder nebeneinander auf einem RFID-fähigen Etikett sinkt jedoch in aller Regel die Leistungsfähigkeit (Performance) der einzelnen Transponder und der Platzbedarf für das Etikett steigt.

Ansätze aus dem Stand der Technik, die sich mit dem Problem mehrbandfähiger Hochfrequenztransponder beschäftigen, finden sich in den Dokumenten DE 10 2008 022 537 A1, DE 10 2013 111 027 A1, US 2009/0231139 A1, US 2011/0084888 A1, US 2014/0246503 A1 und US 2016/0342883 A1. Das Dokument US 6 049 461 A offenbart eine Schaltungseinheit mit einem isolierenden Substrat, auf dem sich eine leitende, flache Spule befindet. Die Spule kann aus einer Vielzahl von Spulenschichtabschnitten bestehen, die durch Isolierschichten getrennt sind.

### ZUSAMMENFASSUNG DER ERFINDUNG

Eine der Aufgaben der Erfindung liegt demnach darin begründet, Lösungen für die Miniaturisierung von Dualbandtranspondern zu finden, insbesondere für die Anwendung in der textilindustriellen Wertschöpfungskette.

Die Erfindung ist durch die unabhängigen Ansprüche definiert. Die abhängigen Ansprüche definieren bevorzugte Ausführungsbeispiele.

Eine wesentliche Idee der Erfindung besteht darin, die beiden Antennen für den Ultrahochfrequenz-(UHF-)Bereich und den Hochfrequenz-(HF-)Bereich voneinander räumlich oder abstimmungstechnisch nicht abzugrenzen, sondern stattdessen die Hochfrequenzantenne als funktional integralen Bestandteil der Ultrahochfrequenzantenne vorzusehen. Die Frequenzbereiche, für die die beiden Antennen jeweils zuständig sind, sind weit genug voneinander entfernt, um eine gegenseitige Beeinträchtigung im jeweils relevanten Empfangs- und Sendeband zu vermeiden. Die jeweiligen Antennen werden dabei so aufeinander abgestimmt, dass sie nur mit der jeweils anderen Antenne ihre volle Leistungsfähigkeit entfalten können. Beispielsweise kann die Ultrahochfrequenz-Schleifenantenne alleine auf eine Mittenfrequenz von etwa 800 MHz abgestimmt werden. Die Hochfrequenz-Schleifenantenne kann dann so innerhalb der Außenkontur der Ultrahochfrequenz-Schleifenantenne angeordnet werden, dass die Ultrahochfrequenz-Schleifenantenne auf eine Mittenfrequenz von etwa 900 MHz verstimmt wird, d.h. dass Ultrahochfrequenz-Schleifenantenne und Hochfrequenz-Schleifenantenne gemeinsam im Ultrahochfrequenzbereich eine Mittenfrequenz von 900 MHz erreichen.

Um die Antennenstruktur des Transponders so kompakt wie möglich zu gestalten, ist es eine der Hauptideen der Erfindung, die Hochfrequenzantenne vollständig von der Ultrahochfrequenzantenne umschließen zu lassen. Vollständiges Umschließen der Hochfrequenz-Schleifenantenne durch die Ultrahochfrequenz-Schleifenantenne bedeutet in diesem Zusammenhang, dass die elektromagnetisch wirksame Durchtrittsfläche der Hochfrequenz-Schleifenantenne vollständig in der elektromagnetisch wirksamen Durchtrittsfläche der Ultrahochfrequenz-Schleifenantenne beinhaltet ist. Mit anderen Worten umfassen alle Schleifen der Ultrahochfrequenz-Schleifenantenne die Schleifen und gegebenenfalls übrigen Antennenabschnitte der Hochfrequenz-Schleifenantenne derart, dass kein Antennenteil der Hochfrequenz-Schleifenantenne über die effektive Antennenfläche der Ultrahochfrequenz-Schleifenantenne in der Ebene des Trägersubstrats hinausragt.

Dadurch können die Dimensionen der resultierenden verschachtelten Antennenstruktur auf etwa 13 x 13 mm, d.h. auf weniger als 170 mm² beschränkt werden. Dies ermöglicht die Implementierung eines Dualbandtransponders mit geringem Bauraumbedarf, der sich für kompakte textile Etiketten besonders gut eignet. Vor allem kann die Implementierung der Hochfrequenz-Schleifenantenne auf zwei Seiten eines Trägersubstrats bzw. einer Substratlage eines Trägersubstrats gewährleisten, dass die Gesamtlänge der Hochfrequenz-Schleifenantenne ausreichend groß ist, der Flächenbedarf für die Hochfrequenz-Schleifenantenne in der Ebene der Substratlagen des Trägersubstrats so gering bleibt, dass die Ultrahochfrequenz-Schleifenantenne die Hochfrequenz-Schleifenantenne vollständig umschließen kann.

Vorteilhafte Ausgestaltungen und Weiterbildungen ergeben sich aus den weiteren Unteransprüchen sowie aus der Beschreibung unter Bezugnahme auf die Figuren.

Gemäß einigen Ausführungsformen des erfindungsgemäßen Dualbandtransponders kann das Trägersubstrat mindestens zwei planare Substratlagen aufweisen. In einigen dieser Ausführungsformen kann die Ultrahochfrequenz-Schleifenantenne auf einer ersten Seite einer ersten der mindestens zwei planaren Substratlagen des Trägersubstrats aufgebracht sein. In manchen dieser Ausführungsformen kann die Hochfrequenz-Schleifenantenne auf zwei gegenüberliegenden Seiten einer zweiten der mindestens zwei planaren Substratlagen des Trägersubstrats aufgebracht sein.

Gemäß einigen weiteren Ausführungsformen des erfindungsgemäßen Dualbandtransponders kann der Dualbandtransponder erste Durchkontaktierungselemente aufweisen, welche durch die zweite der mindestens zwei planaren Substratlagen des Trägersubstrats hindurch ausgebildet sind, und welche Teile der Hochfrequenz-Schleifenantenne auf der ersten Seite des zweiten der mindestens zwei planaren Substratlagen des Trägersubstrats mit Teilen der Hochfrequenz-Schleifenantenne auf der zweiten Seite des zweiten der mindestens zwei planaren Substratlagen des Trägersubstrats elektrisch leitend verbinden. Die Anzahl der der Durchkontaktierungselemente kann von der Anzahl der zu verbindenden Antennenelemente der Hochfrequenz-Schleifenantenne auf den beiden Seiten des Trägersubstrats abhängig. Beispielsweise können zwei separate Durchkontaktierungselemente in Durchgangslöchern in dem Trägersubstrat im Wesentlichen senkrecht zu planaren Erstreckung des Trägersubstrats ausgebildet werden.

Gemäß einigen weiteren Ausführungsformen des erfindungsgemäßen Dualbandtransponders kann der Dualbandtransponder zweite Durchkontaktierungselemente umfassen, welche durch die erste der mindestens zwei planaren Substratlagen des Trägersubstrats hindurch ausgebildet sind.

Gemäß einigen weiteren Ausführungsformen des erfindungsgemäßen Dualbandtransponders kann der Dualbandtransponder einen Dualbandtransponderchip aufweisen, welcher mit der Ultrahochfrequenz-Schleifenantenne und der Hochfrequenz-Schleifenantenne gekoppelt ist. Ein Dualbandtransponderchip kann dabei ein Chip sein, der sowohl im Ultrahochfrequenz- als auch im Hochfrequenzbereich arbeitsfähig ist und der verschiedene Übertragungsprotokolle bei den verschiedenen Frequenzen unterstützt.

Gemäß einigen alternativen Ausführungsformen des erfindungsgemäßen Dualbandtransponders kann der Dualbandtransponder einen Ultrahochfrequenz-Transponderchip, welcher mit der Ultrahochfrequenz-Schleifenantenne gekoppelt ist, und eine Hochfrequenz-Transponderchip aufweisen, welcher mit der Hochfrequenz-Schleifenantenne gekoppelt ist. Der Ultrahochfrequenz-Transponderchip und der Hochfrequenz-Transponderchip können dabei in unterschiedlichen Frequenzbändern arbeiten und gemäß verschiedenen Datenübertragungsprotokollen wie etwa RAIN RFID und NFC ausgelegt sein. Der Ultrahochfrequenz-Transponderchip und der Hochfrequenz-Transponderchip können in zwei separaten Prozessen bestückt werden. Dabei kann die Größe der Thermode 8 mm betragen, so dass es vorteilhaft ist, den lateralen Abstand des Ultrahochfrequenz-Transponderchips zum Hochfrequenz-Transponderchip auf mindestens 8 mm zu setzen, so dass die Thermode für den zweiten Bestückungsprozess den jeweils schon bestückten Chip nicht mehr berührt.

Gemäß einigen weiteren Ausführungsformen des erfindungsgemäßen Dualbandtransponders kann der Dualbandtransponder zweite Durchkontaktierungselemente aufweisen, welche durch die erste der mindestens zwei planaren Substratlagen des Trägersubstrats hindurch ausgebildet sind, so dass der Dualbandtransponderchip oder der Ultrahochfrequenz-Transponderchip mit der Ultrahochfrequenz-Schleifenantenne über die zweiten Durchkontaktierungselemente gekoppelt ist.

Gemäß einigen weiteren Ausführungsformen des erfindungsgemäßen Dualbandtransponders können die zweiten Durchkontaktierungselemente dabei weiterhin durch die zweite der mindestens zwei planaren Substratlagen des Trägersubstrats hindurch ausgebildet sind.

Gemäß einigen weiteren Ausführungsformen des erfindungsgemäßen Dualbandtransponders kann der Dualbandtransponder eine Adhäsivschicht aufweisen, welche zwischen der ersten der mindestens zwei planaren Substratlagen des Trägersubstrats und der zweiten der mindestens zwei planaren Substratlagen des Trägersubstrats angeordnet ist. Der Dualbandtransponderchip bzw. der Ultrahochfrequenz-Transponderchip und der Hochfrequenz-Transponderchip können dabei in manchen Ausführungsformen in der Adhäsivschicht angeordnet sein.

Gemäß einigen alternativen Ausführungsformen des erfindungsgemäßen Dualbandtransponders kann das Trägersubstrat genau eine planare Substratlage aufweisen. Die Ultrahochfrequenz-Schleifenantenne und die Hochfrequenz-Schleifenantenne können in diesem Fall an den Seiten der genau einen planaren Substratlage aufgebracht sein.

Gemäß einigen weiteren Ausführungsformen des erfindungsgemäßen Dualbandtransponders können Durchkontaktierungselemente durch die genau eine planare Substratlage hindurch ausgebildet sein. Die Ultrahochfrequenz-Schleifenantenne und die Hochfrequenz-Schleifenantenne können dabei mit einem Dualbandtransponderchip gekoppelt sein.

Gemäß einigen alternativen Ausführungsformen des erfindungsgemäßen Dualbandtransponders können Durchkontaktierungselemente durch die genau eine planare Substratlage hindurch ausgebildet sein, so dass die Ultrahochfrequenz-Schleifenantenne mit einem Ultrahochfrequenz-Transponderchip gekoppelt ist, und die Hochfrequenz-Schleifenantenne mit einem Hochfrequenz-Transponderchip gekoppelt ist.

Gemäß einigen weiteren Ausführungsformen des erfindungsgemäßen Dualbandtransponders können die Ultrahochfrequenz-Schleifenantenne und die Hochfrequenz-Schleifenantenne so aufeinander abgestimmt sein, dass die Funktionsfähigkeit der Ultrahochfrequenz-Schleifenantenne ohne die Anwesenheit der Hochfrequenz-Schleifenantenne eingeschränkt wäre.

Gemäß einigen weiteren Ausführungsformen des erfindungsgemäßen Dualbandtransponders kann der Flächeninhalt der Fläche des Dualbandtransponders in der Ebene der planaren Substratlagen des Trägersubstrats weniger als 170 mm² betragen.

Gemäß einigen Ausführungsformen des erfindungsgemäßen textilen Etiketts kann das textile Etikett weiterhin eine Dipolantenne aufweisen, welche in das textile Etikettensubstrat eingewirkt oder eingewebt ist. Dabei kann in einigen Ausführungsformen die Ultrahochfrequenz-Schleifenantenne induktiv in die Dipolantenne einkoppeln.

Gemäß einigen weiteren Ausführungsformen des erfindungsgemäßen textilen Etiketts kann der Dualbandtransponder mit einem Textiltransferklebstoff beschichtet und über den Textiltransferklebstoff mit dem textilen Etikettensubstrat waschfest verbunden sein.

Gemäß einigen weiteren Ausführungsformen des erfindungsgemäßen textilen Etiketts kann das Trägersubstrat des Dualbandtransponders mindestens eines der Materialien aus der Gruppe von Polyethylenterephthalat (PET), Polyimid (Pl), FR4 (Verbundmaterial aus Glasfasergewebe und Epoxidharz) und Polyetheretherketon (PEEK) aufweisen. Dabei kann das Dualbandtransponder grundsätzlich als mehrlagiges Laminat ausgebildet werden, je nach Anforderungen hinsichtlich der Waschechtheit, der Wasserdichtigkeit und/oder der chemischen Resistenz gegenüber Stoffen wie etwa Schweiß oder Reinigungsmitteln.

Gemäß einigen weiteren Ausführungsformen des erfindungsgemäßen textilen Etiketts kann der Abstand zwischen der Ultrahochfrequenz-Schleifenantenne und der Hochfrequenz-Schleifenantenne mindestens 0,8 mm betragen. Der Ultrahochfrequenz-Transponderchip und der Hochfrequenz-Transponderchip können in zwei separaten Prozessen bestückt werden. Dabei kann die Größe der Thermode 8 mm betragen, so dass es vorteilhaft ist, den lateralen Abstand des Ultrahochfrequenz-Transponderchips zum Hochfrequenz-Transponderchip auf mindestens 8 mm zu setzen, so dass die Thermode für den zweiten Bestückungsprozess den jeweils schon bestückten Chip nicht mehr berührt.

Gemäß einigen Ausführungsformen des erfindungsgemäßen Verfahrens kann ein Identifikationscode für den Ultrahochfrequenz-Transponderchip in einen Speicher des Hochfrequenz-Transponderchips programmiert werden. Gemäß einigen weiteren Ausführungsformen des erfindungsgemäßen Verfahrens kann ein Identifikationscode für den Hochfrequenz-Transponderchip in einen Speicher des Ultrahochfrequenz-Transponderchips programmiert werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 ein mit einem Dualbandtransponder bestücktes textiles Etikett in schematischer Draufsicht gemäß einer Ausführungsform der Erfindung;
Fig. 2A bis 2F schematische Schnittansichten im Bereich des Dualbandtransponders der Fig. 1 entlang der Schnittlinie A-A' gemäß verschiedener möglicher Ausführungsformen der Erfindung;
Fig. 3 ein schematisches Blockschaubild funktioneller Komponenten eines Transponderchipmoduls für einen Dualbandtransponder gemäß einer weiteren Ausführungsform der Erfindung; und
Fig. 4 ein abstrahiertes Flussdiagramm eines beispielhaften Verfahrens zur Herstellung eines textilen Etiketts gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### AUSFÜHRLICHE BESCHREIBUNG VON AUSFÜHRUNGSBEISPIELEN

RFID-Transponder im Sinne der vorliegenden Erfindung sind elektronische Module, die im Wesentlichen einen elektronischen Speicherchip und eine mit dem Speicherchip gekoppelte und in das Modul integrierte Antenne aufweisen. RFID-Transponder können in verschiedenen Frequenzbändern elektromagnetische Signale aussenden und empfangen, beispielsweise im Bereich 125 kHz ("low frequency", LF) und 5,8 GHz ("super-high frequency", SHF). Je nach gewünschtem Frequenzband wird die Bauform der integrierten Antenne gewählt. Von spezieller Bedeutung sind Frequenzbänder um 13,56 MHz ("high frequency", HF) und zwischen 860 MHz bis 960 MHz ("ultra-high frequency", UHF).

UHF-Frequenzbänder können beispielsweise in der Logistik verwendet werden, da auf diesen Kanälen eine höhere Zugriffs- und Auslesereichweite erreicht werden kann als auf HF-Kanälen. Frequenz, Antennenform und Antennengröße können entsprechend gewählt werden, um eine gewünschte Zugriffs- und Auslesereichweite, Robustheit gegenüber Störungen und Umwelteinflüssen sowie Robustheit gegenüber Störungen von RFID-Transpondern untereinander zu gewährleisten. Über ein elektromagnetisches Feld zwischen einem Lesegerät und der integrierten Antenne des RFID-Transponders kann eine Luftschnittstelle etabliert werden, über die drahtlos und unter Nutzung vorgegebener Datenaustauschprotokolle Daten zwischen dem Speicherchip des RFID-Transponders und einem Prozessor des Lesegerätes ausgetauscht werden können.

RFID-Transponder können aus einer fertigungstechnischen Vorstufe hergestellt werden, sogenannten Inlays. Inlays bestehen lediglich aus auf einem Trägersubstrat aufgebrachten Chips und Antennen. Die Inlays können dann mit entsprechenden Häusungen oder Schutzschichten versehen werden, um ein gegenüber Umwelteinflüssen robustes und gegenüber metallischen Gegenständen ausreichend isoliertes Transpondermodul zu erhalten.

Dualbandtransponder im Sinne der vorliegenden Offenbarung sind RFID-Transponder, welche bei mindestens zwei unterschiedlichen Frequenzen bzw. in zwei unterschiedlichen Frequenzbändern Daten senden und empfangen können. Dabei können Dualbandtransponder insbesondere sowohl im Hochfrequenzbereich bei etlichen MHz, beispielsweise bei 13,56 MHz, als auch im Ultrahochfrequenzbereich bei etlichen hundert bis tausend MHz, beispielsweise zwischen 860 und 960 MHz, funktionsfähig sein. Mit Nahfeld-Technologie (engl.: Near Field Communication, NFC) bezeichnet man eine RFID-Technologie, die auf induktiver Kopplung beruht und mit einem Leseabstand im Bereich von Zentimetern wirkt. Sie arbeitet im oben genannten Hochfrequenzbereich von 13,56 MHz und mit einer Übertragungsrate von maximal 424 kBit pro Sekunde. NFC ist international standardisiert, beispielsweise in ISO 18092, ECMA 340 und ETSI TS 102 190.

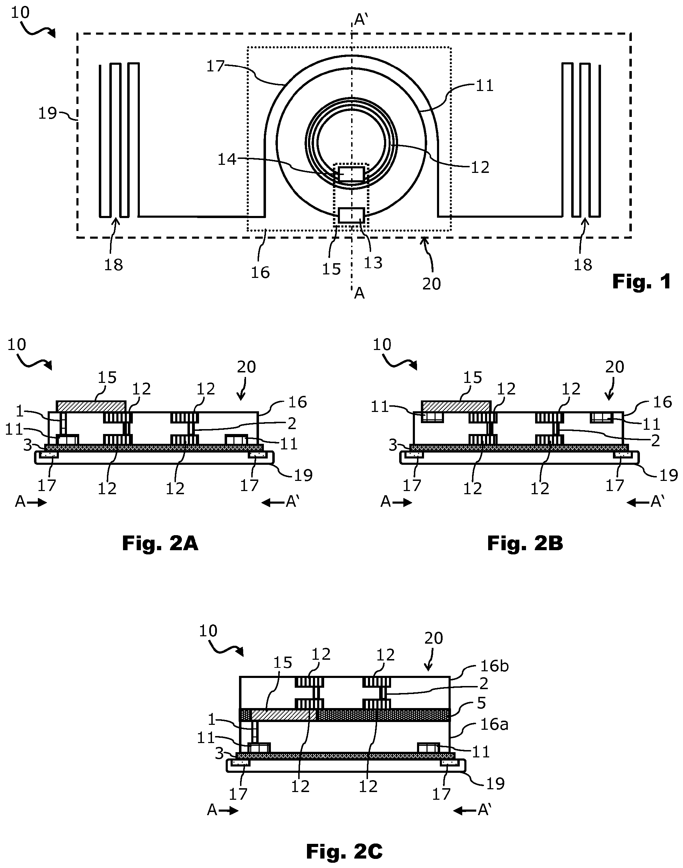

Fig. 1 zeigt ein mit einem Dualbandtransponder 20 bestücktes textiles Etikett 10 in schematischer Draufsicht. Das textile Etikett 10 umfasst ein textiles Etikettensubstrat 19, beispielsweise aus einem gewebten oder gewirkten Textilstoff. Das textile Etikett 10 kann beispielsweise eine im Wesentlichen rechteckige Außenkontur aufweisen und kann dafür vorgesehen sein, in einem Kleidungsstück eingenäht oder eingeklebt zu werden. In das textile Etikettensubstrat 19 ist eine Dipolantenne eingewirkt oder eingewebt, beispielsweise aus einem elektrisch leitfähigen Webfaden oder Schussfaden. Die Dipolantenne dient der Signalübertragung im Ultrahochfrequenzfernfeld. Hierzu kann die Dipolantenne zwei langgestreckte Arme mit einer in der Mitte des textilen Etikettensubstrats 19 liegenden, einseitig offenen Schleifenantenne 17 aufweisen. An die zwei langgestreckten Arme können sich mäanderförmige Verlängerungen 18 der Dipolantenne anschließen. Bei einer Faltung von Dipolantennenarmen zu Mäandern oder fraktalen Strukturen lassen sich gute Kompromisse bezüglich der elektrischen Eigenschaften ergeben und gleichzeitig die Dimensionen der Dipolantenne platzsparend begrenzen.

Auf dem textilen Etikettensubstrat 19 ist ein Dualbandtransponder 20 aufgebracht, beispielsweise mittig über dem Schleifenelement 17 der Dipolantenne des textilen Etikettensubstrats 19. Der Dualbandtransponder 20 kann beispielsweise an der Unterseite mit einem Textiltransferklebstoff 3 beschichtet sein. Dieser Textiltransferklebstoff 3 vermittelt die dauerhafte Haftung des Dualbandtransponders 20 auf dem textilen Etikettensubstrat 19. Insbesondere kann der Textiltransferklebstoff 3 derart gewählt werden, dass das textile Etikett 10 mehrfach gewaschen werden kann, ohne dass sich die Verbindung zwischen Dualbandtransponder 20 und textilem Etikettensubstrat 19 löst.

Der Dualbandtransponder 20 weist prinzipiell ein Trägersubstrat 16 auf, auf dem eine Ultrahochfrequenz-Schleifenantenne 11 und eine Hochfrequenz-Schleifenantenne 12 aufgebracht sind. Die Ultrahochfrequenz-Schleifenantenne 11 und die Hochfrequenz-Schleifenantenne 12 sind derart angeordnet, dass die Ultrahochfrequenz-Schleifenantenne 11 die Hochfrequenz-Schleifenantenne 12 in einer Ebene parallel zur Breitfläche des Trägersubstrats 16 vollständig umschließt, d.h. die Bestandteile der Hochfrequenz-Schleifenantenne 12 ragen in der Draufsicht der Fig. 1 nicht über die Außenkontur der Ultrahochfrequenz-Schleifenantenne 11 hinaus.

Die Ultrahochfrequenz-Schleifenantenne 11 kann beispielsweise eine einzelne Schlaufe ("Loop") aufweisen, kann jedoch auch mehrere konzentrische spiralförmig angeordnete Loops aufweisen. Ebenso kann die Hochfrequenz-Schleifenantenne 12 mehrere konzentrische spiralförmig angeordnete Loops aufweisen. Die Außenform der einzelnen Loops kann - wie in Fig. 1 beispielhaft illustriert - kreisförmig sein. Es kann aber auch möglich sein, andere Schlaufenformen zu wählen, wie beispielsweise rechteckig mit abgerundeten Ecken, polygonal mit abgerundeten Ecken, oval oder Mischformen davon.

Die Ultrahochfrequenz-Schleifenantenne 11 und die Hochfrequenz-Schleifenantenne 12 sind so aufeinander abgestimmt, dass die Funktionsfähigkeit der Ultrahochfrequenz-Schleifenantenne 11 ohne die Anwesenheit der Hochfrequenz-Schleifenantenne 12 eingeschränkt wäre. Mit anderen Worten wird die elektromagnetische Beeinflussung der beiden Schleifenantennen 11 und 12 untereinander bereits in der Designphase berücksichtigt, um die volle Leistungsfähigkeit beider Schleifenantennen 11 und 12 nur bei einer gemeinsamen Präsenz in dem Dualbandtransponder 20 zu erhalten. Durch die Verschachtelung der Schleifenantennen 11 und 12 kann der Flächeninhalt der Fläche des Dualbandtransponders 20 in der Draufsicht der Fig. 1 weniger als 170 mm² betragen, beispielsweise auf eine quadratische Fläche von 13 mm x 13 mm begrenzt werden.

Die Ultrahochfrequenz-Schleifenantenne 11 ist so angeordnet, dass sie induktiv in das Schleifenelement 17 der Dipolantenne einkoppeln kann. Die Form des Dualbandtransponder 20 ist so gewählt, dass die Einkoppelstrecke der Ultrahochfrequenz-Schleifenantenne 11 mit dem Schleifenelement 17 der Dipolantenne möglichst lange ist.

Verschiedene beispielhafte Varianten für die Ausgestaltung eines Dualbandtransponders 20, welcher auf das textile Etikettensubstrat 19 der Fig. 1 zur Bildung eines textilen Etiketts 10 aufgebracht werden kann, sind in den Fig. 2A bis 2F illustriert. Es sollte dabei klar sein, dass einzelne Merkmale der Varianten der Fig. 2A bis 2F miteinander kombiniert werden können, um zu weiteren, nicht explizit dargestellten Varianten für einen Dualbandtransponder 20 zu gelangen.

Das Trägersubstrat 16 kann mindestens eine planare Substratlage aufweisen und aus einem Material oder verschiedenen Materialien zusammengesetzt sein. Beispielhafte Materialien und Materialkombination sind Polyethylenterephthalat (PET), Polyimid (Pl), FR4 und Polyetheretherketon (PEEK). Das Trägersubstrat 16 kann zusätzlich mit einem mehrschichtigen Laminat aus PET-Folien, vernetzenden Klebstoffen und/oder druckempfindlichen Klebstoffen ("pressure sensitive adhesives", PSA) versehen werden, um das Trägersubstrat 16 und die darauf aufgebrachten Schaltungselemente gegenüber Wäschezyklen oder anderen textilüblichen Behandlungsschritten zu schützen und die Funktionsfähigkeit des Transponders zu erhalten.

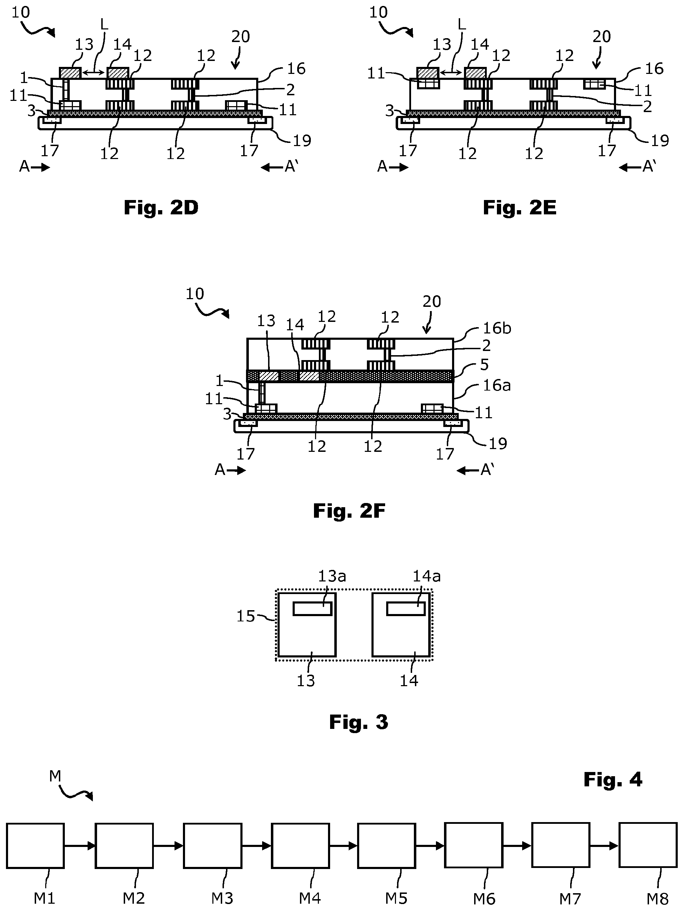

Wie in den Fig. 2A, 2B, 2D und 2E dargestellt, kann das Trägersubstrat 16 genau aus einer planaren Substratlage bestehen. Die Ultrahochfrequenz-Schleifenantenne 11 kann dabei (wie in Fig. 2A und 2D gezeigt) auf der Unterseite der planaren Substratlage aufgebracht werden oder (wie in Fig. 2B und 2E gezeigt) auf der Oberseite der planaren Substratlage. Die Hochfrequenz-Schleifenantenne 12 ist auf beiden Seiten der genau einen planaren Substratlage aufgebracht und deren Bestandteile auf den beiden Seiten können durch ein oder mehrere Durchkontaktierungselemente 2, die durch die Substratlage hindurch ausgebildet sind, elektrisch leitend miteinander verbunden werden. Je nachdem, auf welcher Seite die Ultrahochfrequenz-Schleifenantenne 11 angebracht ist, können weitere Durchkontaktierungselemente 1 durch die genau eine planare Substratlage hindurch ausgebildet werden, um jeweils eine elektrisch leitende Ankopplung an die Ultrahochfrequenz-Schleifenantenne 11 von der jeweils anderen Seite aus zu gewährleisten.

Die Ultrahochfrequenz-Schleifenantenne 11 und die Hochfrequenz-Schleifenantenne 12 können jeweils aus elektrisch leitfähigen Schichten aus beispielsweise Aluminium oder Kupfer ausgebildet werden, wie etwa durch Schablonenätzen, PVD oder CVD.

Wie in den Fig. 2A bis 2C dargestellt, können die Ultrahochfrequenz-Schleifenantenne 11 und die Hochfrequenz-Schleifenantenne 12 gemeinsam mit einem einzigen Dualbandtransponderchip 15 gekoppelt werden. Dieser Dualbandtransponderchip 15 kann sowohl im Ultrahochfrequenzbereich als auch im Hochfrequenzbereich arbeiten und je nach Frequenzbereich mit der jeweiligen der Schleifenantennen 11 und 12 zum Senden und Empfangen von Signalen zusammenwirken.

Alternativ dazu ist es - wie in den Fig. 2D bis 2F dargestellt - auch möglich, für jede der Schleifenantennen 11 und 12 einen separaten Chip vorzusehen. Beispielsweise kann die Ultrahochfrequenz-Schleifenantenne 11 mit einem Ultrahochfrequenz-Transponderchip 13 gekoppelt sein und die Hochfrequenz-Schleifenantenne 12 kann mit einem Hochfrequenz-Transponderchip 14 gekoppelt sein. Der laterale Abstand L der beiden Chips 13 und 14 auf der Oberfläche des Trägersubstrats 16 kann dabei mindestens 8 mm betragen, beispielsweise um eine Bestückung in zwei separaten Bestückungsprozessen ohne Beschädigung des jeweils anderen Chips zu ermöglichen.

Wie in den Fig. 2C und 2F dargestellt, kann das Trägersubstrat 16 auch aus mindestens zwei planaren Substratlagen bestehen, die übereinander gestapelt werden. Dabei kann die Ultrahochfrequenz-Schleifenantenne 11 beispielsweise auf einer ersten Seite einer ersten Substratlage 16a der mindestens zwei planaren Substratlagen des Trägersubstrats 16 aufgebracht werden. Die Hochfrequenz-Schleifenantenne 12 kann dann auf zwei gegenüberliegenden Seiten einer zweiten Substratlage 16b der mindestens zwei planaren Substratlagen des Trägersubstrats 16 aufgebracht werden. In den Fig. 2C und 2F ist die Ultrahochfrequenz-Schleifenantenne 11 jeweils als auf der Unterseite der ersten Substratlage 16a aufgebracht dargestellt; es sollte jedoch klar sein, dass es auch möglich ist - in Analogie zu den Varianten der Fig. 2B und 2E-, die Ultrahochfrequenz-Schleifenantenne 11 auf der Oberseite der ersten Substratlage 16a aufzubringen. In diesen Fällen müssen die Durchkontaktierungselemente 1 entweder nur durch die zweite Substratlage 16b hindurch ausgebildet werden oder können gegebenenfalls ganz entfallen.

Wie in den Fig. 2C und 2F sind die Durchkontaktierungselemente 2 durch die zweite Substratlage 16b des Trägersubstrats 16 hindurch ausgebildet, so dass entsprechende Teile der Hochfrequenz-Schleifenantenne 12 auf der ersten Seite der zweiten Substratlage 16b mit Teilen der Hochfrequenz-Schleifenantenne 12 auf der zweiten Seite der zweiten Substratlage 16b elektrisch leitend verbunden sind. Wiederum kann es möglich sein, entweder einen gemeinsamen Dualbandtransponderchip 15 vorzusehen, welcher mit der Ultrahochfrequenz-Schleifenantenne 11 und der Hochfrequenz-Schleifenantenne 12 gekoppelt ist (siehe Fig. 2C), oder einen separaten Ultrahochfrequenz-Transponderchip 13 und einen separaten Hochfrequenz-Transponderchip 14, welche jeweils mit nur einer der Schleifenantennen 11 und 12 koppeln.

Bei der Variante mit den mindestens zwei Substratlagen 16a und 16b kann es möglich sein, zwischen den zwei planaren Substratlagen des Trägersubstrats 16 eine Adhäsivschicht 5 einzubringen. In dieser Adhäsivschicht 5 kann dann der Dualbandtransponderchip 15 eingebracht werden und die jeweiligen Schleifenantennen von der Unterseite bzw. der Oberseite der einzelnen planaren Substratlagen elektrisch leitend kontaktieren (siehe Fig. 2C). Alternativ dazu kann es möglich sein, zwei separate Chips wie etwa den Ultrahochfrequenz-Transponderchip 13 und der Hochfrequenz-Transponderchip 14 in der Adhäsivschicht 5 anzuordnen (siehe Fig. 2F).

Fig. 4 zeigt ein abstrahiertes Flussdiagramm eines Verfahrens M zur Herstellung eines textilen Etiketts. Das Verfahren M kann insbesondere zur Herstellung eines textilen Etiketts 10 genutzt werden, wie es im Zusammenhang mit Fig. 1 erläutert worden ist. In dem Verfahren M können Dualbandtransponder hergestellt werden bzw. zum Einsatz kommen, insbesondere Dualbandtransponder 20 wie im Zusammenhang mit den Fig. 2A bis 2F und Fig. 3 erläutert.

In einem ersten Schritt M1 wird eine Ultrahochfrequenz-Schleifenantenne 11 auf einer ersten Seite eines Trägersubstrats 16 mit mindestens einer planaren Substratlage aufgebracht. In einem zweiten Schritt M2 wird eine Hochfrequenz-Schleifenantenne 12 auf zwei gegenüberliegenden Seiten des Trägersubstrats 16 aufgebracht, so dass die Ultrahochfrequenz-Schleifenantenne 11 die Hochfrequenz-Schleifenantenne 12 in einer Ebene parallel zu der mindestens einen planaren Substratlage vollständig umschließt. Die beiden Schritte M1 und M2 können verfahrenstechnisch auch in umgekehrter Reihenfolge oder im Wesentlichen gleichzeitig durchgeführt werden.

Vollständiges Umschließen der Hochfrequenz-Schleifenantenne 12 durch die Ultrahochfrequenz-Schleifenantenne 11 bedeutet in diesem Zusammenhang, dass die elektromagnetisch wirksame Durchtrittsfläche der Hochfrequenz-Schleifenantenne 12 vollständig in der elektromagnetisch wirksamen Durchtrittsfläche der Ultrahochfrequenz-Schleifenantenne 11 beinhaltet ist.

In einem dritten Schritt M3 wird dann ein Ultrahochfrequenz-Transponderchip 13 an die Ultrahochfrequenz-Schleifenantenne 11 angekoppelt. In einem vierten Schritt M4 wird ein Hochfrequenz-Transponderchip 14 an die Hochfrequenz-Schleifenantenne 12 angekoppelt. Die Schritte M3 und M4 können wiederum in umgekehrter Reihenfolge oder im Wesentlichen gleichzeitig durchgeführt werden.

In einem fünften Schritt M5 wird eine Dipolantenne in ein textiles Etikettensubstrat 19 eingewirkt oder eingewebt, beispielsweise unter Verwendung eines elektrisch leitfähigen Antennenfadens. Das textile Etikettensubstrat 19 kann dabei insbesondere selbst ein gewebter oder gewirkter Textilstoff sein. Das Trägersubstrat 16 mit der Ultrahochfrequenz-Schleifenantenne 11, der Hochfrequenz-Schleifenantenne 12, dem Ultrahochfrequenz-Transponderchip 13 und dem Hochfrequenz-Transponderchip 14 werden in einem sechsten Schritt M6 auf dem textilen Etikettensubstrat 19 aufgebracht.

Optional kann es möglich sein, in einem siebten Schritt M7 und einem achten Schritt M8 wechselseitige Zuordnungen der zwei Chips zueinander in den jeweils anderen Chip zu speichern. Mit anderen Worten kann es möglich sein, einen Identifikationscode für den Ultrahochfrequenz-Transponderchip 13, beispielsweise einen Tag-Identifier, in einen Speicher 14a des Hochfrequenz-Transponderchips 14 zu programmieren, und einen Identifikationscode für den Hochfrequenz-Transponderchip 14, beispielsweise einen Unique-Identifier, in einen Speicher 13a des Ultrahochfrequenz-Transponderchips 13 zu programmieren. Die jeweiligen Speicher 13a und 14a können jeweils Speicherbereiche von nutzerverfügbaren Speicherbänken der jeweiligen Chips 13 und 14 sein.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

## Patentansprüche

1. Dualbandtransponder (20), umfassend:
ein Trägersubstrat (16) mit mindestens einer planaren Substratlage;
eine Ultrahochfrequenz-Schleifenantenne (11), welche auf einer Oberseite oder einer Unterseite einer der planaren Substratlagen des Trägersubstrats (16) aufgebracht ist; und
eine Hochfrequenz-Schleifenantenne (12), ,
wobei die Ultrahochfrequenz-Schleifenantenne (11) die Hochfrequenz-Schleifenantenne (12) in einer Ebene parallel zu der mindestens einen planaren Substratlage vollständig umschließt
**dadurch gekennzeichnet,**
**dass** die Schleifen der Hochfrequenz-Schleifenantenne (12) auf einer Unterseite und einer der Unterseite gegenüberliegenden Oberseite einer der planaren Substratlagen des Trägersubstrats (16) aufgebracht sind.

2. Dualbandtransponder (20) gemäß Anspruch 1, wobei das Trägersubstrat (16) mindestens zwei planare Substratlagen (16a, 16b) aufweist, und wobei die Ultrahochfrequenz-Schleifenantenne (11) auf einer Oberseite oder einer Unterseite einer ersten der mindestens zwei planaren Substratlagen des Trägersubstrats (16) aufgebracht ist und die Hochfrequenz-Schleifenantenne (12) auf einer Unterseite und einer der Unterseite gegenüberliegenden Oberseite einer zweiten der mindestens zwei planaren Substratlagen des Trägersubstrats (16) aufgebracht ist.

3. Dualbandtransponder (20) gemäß Anspruch 2, weiterhin mit:
ersten Durchkontaktierungselementen (2), welche durch die zweite der mindestens zwei planaren Substratlagen des Trägersubstrats (16) hindurch ausgebildet sind, und welche Teile der Hochfrequenz-Schleifenantenne (12) auf der Unterseite der zweiten der mindestens zwei planaren Substratlagen des Trägersubstrats (16) mit Teilen der Hochfrequenz-Schleifenantenne (12) auf der Oberseite der zweiten der mindestens zwei planaren Substratlagen des Trägersubstrats (16) elektrisch leitend verbinden.

4. Dualbandtransponder (20) gemäß einem der Ansprüche 2 und 3, weiterhin mit:
zweiten Durchkontaktierungselementen (1), welche durch die erste der mindestens zwei planaren Substratlagen des Trägersubstrats (16) hindurch ausgebildet sind.

5. Dualbandtransponder (20) gemäß einem der Ansprüche 2 und 3, weiterhin mit:
einem Dualbandtransponderchip (15), welcher mit der Ultrahochfrequenz-Schleifenantenne (11) und der Hochfrequenz-Schleifenantenne (12) gekoppelt ist; oder
einem Ultrahochfrequenz-Transponderchip (13), welcher mit der Ultrahochfrequenz-Schleifenantenne (11) gekoppelt ist, und einem Hochfrequenz-Transponderchip (14), welcher mit der Hochfrequenz-Schleifenantenne (12) gekoppelt ist.

6. Dualbandtransponder (20) gemäß Anspruch 5, wobei der Dualbandtransponder (20) weiterhin zweite Durchkontaktierungselemente (1) aufweist, welche durch die erste der mindestens zwei planaren Substratlagen des Trägersubstrats (16) hindurch ausgebildet sind, und wobei der Dualbandtransponderchip (15) oder der Ultrahochfrequenz-Transponderchip (13) mit der Ultrahochfrequenz-Schleifenantenne (11) über die zweiten Durchkontaktierungselemente (1) gekoppelt ist.

7. Dualbandtransponder (20) gemäß Anspruch 6, wobei die zweiten Durchkontaktierungselemente (1) weiterhin durch die zweite der mindestens zwei planaren Substratlagen des Trägersubstrats (16) hindurch ausgebildet sind.

8. Dualbandtransponder (20) gemäß einem der Ansprüche 5 und 6, weiterhin mit:
einer Adhäsivschicht (5), welche zwischen der ersten der mindestens zwei planaren Substratlagen des Trägersubstrats (16) und der zweiten der mindestens zwei planaren Substratlagen des Trägersubstrats (16) angeordnet ist,
wobei der Dualbandtransponderchip (15) bzw. der Ultrahochfrequenz-Transponderchip (13) und der Hochfrequenz-Transponderchip (14) in der Adhäsivschicht (5) angeordnet ist bzw. sind.

9. Dualbandtransponder (20) gemäß Anspruch 1, wobei das Trägersubstrat (16) genau eine planare Substratlage aufweist und die Ultrahochfrequenz-Schleifenantenne (11) an der Oberseite oder der Unterseite der genau einen planaren Substratlage und die Hochfrequenz-Schleifenantenne (12) auf der Oberseite und der Unterseite der genau einen planaren Substratlage aufgebracht sind.

10. Dualbandtransponder (20) gemäß Anspruch 9, wobei
Durchkontaktierungselemente (1) durch die genau eine planare Substratlage hindurch ausgebildet sind und die Ultrahochfrequenz-Schleifenantenne (11) und die Hochfrequenz-Schleifenantenne (12) mit einem Dualbandtransponderchip (15) gekoppelt sind.

11. Dualbandtransponder (20) gemäß Anspruch 9, wobei
Durchkontaktierungselemente (1) durch die genau eine planare Substratlage hindurch ausgebildet sind, die Ultrahochfrequenz-Schleifenantenne (11) mit einem Ultrahochfrequenz-Transponderchip (13) gekoppelt ist, und die Hochfrequenz-Schleifenantenne (12) mit einem Hochfrequenz-Transponderchip (14) gekoppelt ist.

12. Dualbandtransponder (20) gemäß einem der Ansprüche 1 bis 11, wobei die Ultrahochfrequenz-Schleifenantenne (11) und die Hochfrequenz-Schleifenantenne (12) aufeinander abgestimmt sind, so dass die Funktionsfähigkeit der Ultrahochfrequenz-Schleifenantenne (11) ohne die Anwesenheit der Hochfrequenz-Schleifenantenne (12) eingeschränkt wäre, und so dass die Ultrahochfrequenz-Schleifenantenne (11) alleine auf eine Mittenfrequenz von etwa 800 MHz abgestimmt und die Hochfrequenz-Schleifenantenne (12) so angeordnet ist, dass die Ultrahochfrequenz-Schleifenantenne (11) auf eine Mittenfrequenz von etwa 900 MHz verstimmt wird.

13. Dualbandtransponder (20) gemäß einem der Ansprüche 1 bis 12, wobei der Flächeninhalt der Fläche des Dualbandtransponders (20) in der Ebene der planaren Substratlagen des Trägersubstrats (16) weniger als 170 mm² beträgt.

14. Textiles Etikett (10), umfassend:
ein textiles Etikettensubstrat (19); und
einen Dualbandtransponder (20) gemäß einem der Ansprüche 1 bis 13,
welcher auf dem textilen Etikettensubstrat (19) aufgebracht ist.

15. Textiles Etikett (10) gemäß Anspruch 14, weiterhin mit:
einer Dipolantenne (17, 18), welche in das textile Etikettensubstrat (19) eingewirkt oder eingewebt ist, wobei die Ultrahochfrequenz-Schleifenantenne (11) induktiv in die Dipolantenne (17, 18) einkoppelt.

16. Textiles Etikett (10) gemäß einem der Ansprüche 14 bis 15, wobei der Dualbandtransponder (20) mit einem Textiltransferklebstoff (3) beschichtet und über den Textiltransferklebstoff (3) mit dem textilen Etikettensubstrat (19) waschfest verbunden ist.

17. Textiles Etikett (10) gemäß einem der Ansprüche 14 bis 16, wobei das Trägersubstrat (16) des Dualbandtransponders (20) mindestens eines der Materialien aus der Gruppe von Polyethylenterephthalat**,** PET, Polyimid**,** PI, FR4 und Polyetheretherketon, PEEK, aufweist.

18. Textiles Etikett (10) gemäß einem der Ansprüche 14 bis 17, wobei der Abstand (L) zwischen der Ultrahochfrequenz-Schleifenantenne (11) und der Hochfrequenz-Schleifenantenne (12) mindestens 0,8 mm beträgt.

19. Verfahren (M) zur Herstellung eines textilen Etiketts (10), umfassend:
Aufbringen (M1) einer Ultrahochfrequenz-Schleifenantenne (11) auf einer Oberseite oder einer Unterseite eines Trägersubstrats (16) mit mindestens einer planaren Substratlage;
Aufbringen (M2) der Schleifen einer Hochfrequenz-Schleifenantenne (12) auf der Unterseite und der der Unterseite gegenüberliegenden Oberseite des Trägersubstrats (16), so dass die Ultrahochfrequenz-Schleifenantenne (11) die Hochfrequenz-Schleifenantenne (12) in einer Ebene parallel zu der mindestens einen planaren Substratlage vollständig umschließt;
Ankoppeln (M3) eines Ultrahochfrequenz-Transponderchips (13) an die Ultrahochfrequenz-Schleifenantenne (11);
Ankoppeln (M4) eines Hochfrequenz-Transponderchips (14) an die Hochfrequenz-Schleifenantenne (12);
Einwirken oder Einweben (M5) einer Dipolantenne in ein textiles Etikettensubstrat (19); und
Aufbringen (M6) des Trägersubstrats (16) mit der Ultrahochfrequenz-Schleifenantenne (11), der Hochfrequenz-Schleifenantenne (12), dem Ultrahochfrequenz-Transponderchip (13) und dem Hochfrequenz-Transponderchip (14) auf dem textilen Etikettensubstrat (19).

20. Verfahren (M) gemäß Anspruch 19, weiterhin mit den Schritten:
Programmieren (M7) eines Identifikationscodes für den Ultrahochfrequenz-Transponderchip (13) in einen Speicher (14a) des Hochfrequenz-Transponderchips (14); und
Programmieren (M8) eines Identifikationscodes für den Hochfrequenz-Transponderchip (14) in einen Speicher (13a) des Ultrahochfrequenz-Transponderchips (13).

## Claims

1. A dual-band transponder (20), comprising:
a carrier substrate (16) having at least one planar substrate layer;
an ultrahigh-frequency loop antenna (11) applied to an upper side or a lower side of one of the planar substrate layers of the carrier substrate (16); and
a high-frequency loop antenna (12),
wherein the ultrahigh-frequency loop antenna (11) completely encloses the high-frequency loop antenna (12) in a plane parallel to the at least one planar substrate layer,
**characterized in that**
the loops of the high-frequency loop antenna (12) are applied to a lower side and an upper side, opposite to the lower side, of one of the planar substrate layers of the carrier substrate (16).

2. The dual-band transponder (20) according to claim 1, wherein the carrier substrate (16) comprises at least two planar substrate layers (16a, 16b), and wherein the ultrahigh-frequency loop antenna (11) is applied to an upper side or a lower side of a first one of the at least two planar substrate layers of the carrier substrate (16), and the high-frequency loop antenna (12) is applied to a lower side and an upper side, opposite to the lower side, of a second layer of the at least two planar substrate layers of the carrier substrate (16).

3. The dual-band transponder (20) according to claim 2, further comprising:
first through-connection elements (2) which are formed through the second layer of the at least two planar substrate layers of the carrier substrate (16) and electrically connect parts of the high-frequency loop antenna (12) on the lower side of the second layer of the at least two planar substrate layers of the carrier substrate (16) to parts of the high-frequency loop antenna (12) on the upper side of the second layer of the at least two planar substrate layers of the carrier substrate (16).

4. The dual-band transponder (20) according to any one of claims 2 and 3, further comprising:
second through-connection elements (1) which are formed through the first layer of the at least two planar substrate layers of the carrier substrate (16).

5. The dual-band transponder (20) according to any one of claims 2 and 3, further comprising:
a dual-band transponder chip (15) coupled to the ultrahigh-frequency loop antenna (11) and the high-frequency loop antenna (12); or
an ultrahigh-frequency transponder chip (13) coupled to the ultrahigh-frequency loop antenna (11), and a high-frequency transponder chip (14) coupled to the high-frequency loop antenna (12).

6. The dual-band transponder (20) according to claim 5, wherein the dual-band transponder (20) further comprises second through-connection elements (1) formed through the first layer of the at least two planar substrate layers of the carrier substrate (16), and wherein the dual-band transponder chip (15) or the ultrahigh-frequency transponder chip (13) is coupled to the ultrahigh-frequency loop antenna (11) via the second through-connection elements (1).

7. The dual-band transponder (20) according to claim 6, wherein the second through-connection elements (1) are further formed through the second layer of at least two planar substrate layers of the carrier substrate (16).

8. The dual-band transponder (20) according to any one of claims 5 and 6, further comprising:
an adhesive layer (5) arranged between the first layer of at least two planar substrate layers of the carrier substrate (16) and the second layer of at least two planar substrate layers of the carrier substrate (16),
wherein the dual-band transponder chip (15) or the ultrahigh-frequency transponder chip (13) and the high-frequency transponder chip (14) are arranged in the adhesive layer (5).

9. The dual-band transponder (20) according to claim 1, wherein the carrier substrate (16) comprises exactly one planar substrate layer and the ultrahigh-frequency loop antenna (11) is applied to the upper side or the lower side of the exactly one planar substrate layer, and the high-frequency loop antenna (12) is applied to the upper side and the lower side of the exactly one planar substrate layer.

10. The dual-band transponder (20) according to claim 9, wherein through-connection elements (1) are formed through the exactly one planar substrate layer, and the ultrahigh-frequency loop antenna (11) and the high-frequency loop antenna (12) are coupled to a dual-band transponder chip (15).

11. The dual-band transponder (20) according to claim 9, wherein through-connection elements (1) are formed through the exactly one planar substrate layer, the ultrahigh-frequency loop antenna (11) is coupled to an ultrahigh-frequency transponder chip (13), and the high-frequency loop antenna (12) is coupled to a high-frequency transponder chip (14).

12. The dual-band transponder (20) according to any one of claims 1 to 11, wherein the ultrahigh-frequency loop antenna (11) and the high-frequency loop antenna (12) are tuned to each other so that the functionality of the ultrahigh-frequency loop antenna (11) would be restricted without the presence of the high-frequency loop antenna (12), and such that the ultrahigh-frequency loop antenna (11) is tuned itself to a center frequency of approximately 800 MHz and the high-frequency loop antenna (12) is arranged such that the ultrahigh-frequency loop antenna (11) is detuned to a center frequency of approximately 900 MHz.

13. The dual-band transponder (20) according to any one of claims 1 to 12, wherein the surface area of the surface of the dual-band transponder (20) in the plane of the planar substrate layers of the carrier substrate (16) is less than 170 mm².

14. A textile label (10), comprising:
a textile label substrate (19); and
a dual-band transponder (20) according to any one of claims 1 to 13, which is applied to the textile label substrate (19).

15. The textile label (10) according to claim 14, further comprising:
a dipole antenna (17, 18) which is knitted or woven into the textile label substrate (19), wherein the ultrahigh-frequency loop antenna (11) couples inductively into the dipole antenna (17, 18).

16. The textile label (10) according to any one of claims 14 to 15, wherein the dual-band transponder (20) is coated with a textile transfer adhesive (3) and is bonded to the textile label substrate (19) via the textile transfer adhesive (3) in a wash-proof manner.

17. The textile label (10) according to any one of claims 14 to 16, wherein the carrier substrate (16) of the dual-band transponder (20) comprises at least one of the materials selected from the group consisting of polyethylene terephthalate, PET, polyimide, PI, FR4, and polyether ether ketone, PEEK.

18. The textile label (10) according to any one of claims 14 to 17, wherein the distance (L) between the ultrahigh-frequency loop antenna (11) and the high-frequency loop antenna (12) is at least 0.8 mm.

19. A method (M) for manufacturing a textile label (10), comprising:
applying (M1) an ultrahigh-frequency loop antenna (11) to an upper side or a lower side of a carrier substrate (16) having at least one planar substrate layer;
applying (M2) the loops of a high-frequency loop antenna (12) to the lower side and the upper side, opposite to the lower side, of the carrier substrate (16), so that the ultrahigh-frequency loop antenna (11) completely encloses the high-frequency loop antenna (12) in a plane parallel to the at least one planar substrate layer;
coupling (M3) an ultrahigh-frequency transponder chip (13) to the ultrahigh-frequency loop antenna (11);
coupling (M4) a high-frequency transponder chip (14) to the high-frequency loop antenna (12);
knitting or weaving (M5) a dipole antenna into a textile label substrate (19); and
applying (M6) the carrier substrate (16) comprising the ultrahigh-frequency loop antenna (11), the high-frequency loop antenna (12), the ultrahigh-frequency transponder chip (13), and the high-frequency transponder chip (14) to the textile label substrate (19).

20. The method (M) according to claim 19, further comprising the steps of:
programming (M7) an identification code for the ultrahigh-frequency transponder chip (13) into a memory (14a) of the high-frequency transponder chip (14); and
programming (M8) an identification code for the high-frequency transponder chip (14) into a memory (13a) of the ultrahigh-frequency transponder chip (13).

## Revendications

1. Transpondeur à double bande (20), comprenant :
un substrat de support (16) comprenant au moins une couche de substrat plane ;
une antenne boucle à ultra-haute fréquence (11) appliquée sur une face supérieure ou une face inférieure de l'une des couches de substrat planes du substrat de support (16) ; et
une antenne boucle à haute fréquence (12),
sachant que l'antenne boucle à ultra-haute fréquence (11) entoure complètement l'antenne boucle à haute fréquence (12) dans un plan parallèle à ladite au moins une couche de substrat plane,
**caractérisé en ce que**
les boucles de l'antenne boucle à haute fréquence (12) sont appliquées sur une face inférieure et une face supérieure opposée à la face inférieure de l'une des couches de substrat planes du substrat de support (16).

2. Le transpondeur à double bande (20) selon la revendication 1, sachant que le substrat de support (16) comprend au moins deux couches de substrat planes (16a, 16b), et que l'antenne boucle à ultra-haute fréquence (11) est appliquée sur un côté supérieur ou un côté inférieur d'une première couche des au moins deux couches de substrat planes du substrat de support (16), et l'antenne boucle à haute fréquence (12) est appliquée sur un côté inférieur et un côté supérieur, opposé au côté inférieur, d'une deuxième couche des au moins deux couches de substrat planes du substrat de support (16).

3. Le transpondeur à double bande (20) selon la revendication 2, comprenant en outre :
des premiers éléments de connexion traversants (2) formés à travers la deuxième couche des au moins deux couches de substrat planes du substrat de support (16) et reliant électriquement des parties de l'antenne boucle à haute fréquence (12) sur le côté inférieur de la deuxième couche des au moins deux couches de substrat planes du substrat de support (16) à des parties de l'antenne boucle à haute fréquence (12) sur le côté supérieur de la deuxième couche des au moins deux couches de substrat planes du substrat de support (16).

4. Le transpondeur à double bande (20) selon l'une quelconque des revendications 2 et 3, comprenant en outre :
des deuxièmes éléments de connexion traversants (1) formés à travers la première couche des au moins deux couches de substrat planes du substrat de support (16).

5. Le transpondeur à double bande (20) selon l'une quelconque des revendications 2 et 3, comprenant en outre :
une puce de transpondeur à double bande (15) couplée à l'antenne boucle à ultra-haute fréquence (11) et à l'antenne boucle à haute fréquence (12) ; ou
une puce de transpondeur à ultra-haute fréquence (13) couplée à l'antenne boucle à ultra-haute fréquence (11), et une puce de transpondeur à haute fréquence (14) couplée à l'antenne boucle à haute fréquence (12).

6. Le transpondeur à double bande (20) selon la revendication 5, sachant que le transpondeur à double bande (20) comprend en outre des deuxièmes éléments de connexion traversants (1) formés à travers la première couche des au moins deux couches de substrat planes du substrat de support (16), et sachant que la puce de transpondeur à double bande (15) ou la puce de transpondeur à ultra-haute fréquence (13) est couplée à l'antenne boucle à ultra-haute fréquence (11) via les deuxièmes éléments de connexion traversants (1).

7. Le transpondeur à double bande (20) selon la revendication 6, sachant que les deuxièmes éléments de connexion traversants (1) sont en outre formés à travers la deuxième couche des au moins deux couches de substrat planes du substrat de support (16).

8. Le transpondeur à double bande (20) selon l'une quelconque des revendications 5 et 6, comprenant en outre :
une couche adhésive (5) disposée entre la première couche des au moins deux couches de substrat planes du substrat de support (16) et la deuxième couche des au moins deux couches de substrat planes du substrat de support (16),
sachant que la puce de transpondeur à double bande (15) ou la puce de transpondeur à ultra-haute fréquence (13) et la puce de transpondeur à haute fréquence (14) sont disposées dans la couche adhésive (5).

9. Le transpondeur à double bande (20) selon la revendication 1, sachant que le substrat de support (16) comprend exactement une couche de substrat plane et l'antenne boucle à ultra-haute fréquence (11) est appliquée sur la face supérieure ou la face inférieure de ladite exactement une couche de substrat plane, et l'antenne boucle à haute fréquence (12) est appliquée sur la face supérieure et la face inférieure de ladite exactement une couche de substrat plane.

10. Le transpondeur à double bande (20) selon la revendication 9, sachant que des éléments de connexion traversants (1) sont formés à travers ladite exactement une couche de substrat plane, et l'antenne boucle à ultra-haute fréquence (11) et l'antenne boucle à haute fréquence (12) sont couplées à une puce de transpondeur à double bande (15).

11. Le transpondeur à double bande (20) selon la revendication 9, sachant que des éléments de connexion traversants (1) sont formés à travers ladite exactement une couche de substrat plane, l'antenne boucle à ultra-haute fréquence (11) est couplée à une puce de transpondeur à ultra-haute fréquence (13), et l'antenne boucle à haute fréquence (12) est couplée à une puce de transpondeur à haute fréquence (14).

12. Le transpondeur à double bande (20) selon l'une quelconque des revendications 1 à 11, sachant que l'antenne boucle à ultra-haute fréquence (11) et l'antenne boucle à haute fréquence (12) sont accordées l'une sur l'autre de telle sorte que la fonctionnalité de l'antenne boucle à ultra-haute fréquence (11) serait limitée sans la présence de l'antenne boucle à haute fréquence (12), et de telle sorte que l'antenne boucle à ultra-haute fréquence (11) soit elle-même accordée sur une fréquence centrale d'environ 800 MHz et que l'antenne boucle à haute fréquence (12) soit agencée de telle sorte que l'antenne boucle à ultra-haute fréquence (11) soit désaccordée sur une fréquence centrale d'environ 900 MHz.

13. Le transpondeur à double bande (20) selon l'une quelconque des revendications 1 à 12, sachant que l'aire de la surface du transpondeur à double bande (20) dans le plan des couches de substrat planes du substrat de support (16) est inférieure à 170 mm².

14. Étiquette textile (10), comprenant :
un substrat d'étiquette textile (19) ; et
un transpondeur à double bande (20) selon l'une quelconque des revendications 1 à 13, qui est appliqué sur le substrat d'étiquette textile (19).

15. L'étiquette textile (10) selon la revendication 14, comprenant en outre :
une antenne dipôle (17, 18) tricotée ou tissée dans le substrat d'étiquette textile (19), sachant que l'antenne boucle à ultra-haute fréquence (11) se couple de manière inductive à l'antenne dipôle (17, 18).

16. L'étiquette textile (10) selon l'une quelconque des revendications 14 à 15, sachant que le transpondeur à double bande (20) est recouvert d'un adhésif de transfert textile (3) et est collé au substrat d'étiquette textile (19) via l'adhésif de transfert textile (3) de manière résistante au lavage.

17. L'étiquette textile (10) selon l'une quelconque des revendications 14 à 16, sachant que le substrat de support (16) du transpondeur à double bande (20) comprend au moins l'un des matériaux choisis dans le groupe constitué du polyéthylène téréphtalate, PET, du polyimide, PI, du FR4 et du polyétheréthercétone, PEEK.

18. L'étiquette textile (10) selon l'une quelconque des revendications 14 à 17, sachant que la distance (L) entre l'antenne boucle à ultra-haute fréquence (11) et l'antenne boucle à haute fréquence (12) est d'au moins 0,8 mm.

19. Procédé (M) de fabrication d'une étiquette textile (10), comprenant :
l'application (M1) d'une antenne boucle à ultra-haute fréquence (11) sur une face supérieure ou une face inférieure d'un substrat de support (16) comprenant au moins une couche de substrat plane ;
l'application (M2) des boucles d'une antenne boucle à haute fréquence (12) sur la face inférieure et la face supérieure du substrat de support (16) opposée à la face inférieure, de sorte que l'antenne boucle à ultra-haute fréquence (11) entoure complètement l'antenne boucle à haute fréquence (12) dans un plan parallèle à ladite au moins une couche de substrat plane ;
le couplage (M3) d'une puce de transpondeur à ultra-haute fréquence (13) à l'antenne à boucle à ultra-haute fréquence (11) ;
le couplage (M4) d'une puce de transpondeur à haute fréquence (14) à l'antenne boucle à haute fréquence (12) ;
le tricotage ou le tissage (M5) d'une antenne dipôle dans un substrat d'étiquette textile (19) ; et
l'application (M6) du substrat de support (16) comprenant l'antenne boucle à ultra-haute fréquence (11), l'antenne boucle à haute fréquence (12), la puce de transpondeur à ultra-haute fréquence (13) et la puce de transpondeur à haute fréquence (14) au substrat d'étiquette textile (19).

20. Le procédé (M) selon la revendication 19, comprenant en outre les étapes suivantes :
programmer (M7) un code d'identification pour la puce de transpondeur à ultra-haute fréquence (13) dans une mémoire (14a) de la puce de transpondeur à haute fréquence (14) ; et
programmer (M8) un code d'identification pour la puce de transpondeur à haute fréquence (14) dans une mémoire (13a) de la puce de transpondeur à ultra-haute fréquence (13).
